# EUROPÄISCHE PATENTSCHRIFT

(11) **EP 3 204 658 B1**
(45) Veröffentlichungstag und Bekanntmachung des Hinweises auf die Patenterteilung: **18.03.2020**
(21) Anmeldenummer: 15763836.2
(22) Anmeldetag: 09.09.2015
(51) Int. Cl.: F16D 11/14, F16D 11/00

(54) **KLAUENKUPPLUNG MIT SENSOR ZUR ERKENNUNG EINES SCHLIESSZUSTANDS**
DOG CLUTCH COMPRISING A SENSOR FOR RECOGNIZING AN ENGAGED STATE
EMBRAYAGE À CRABOTS POURVU D'UN CAPTEUR SERVANT À DÉTECTER UN ÉTAT DE FERMETURE

(30) Priorität: 10.10.2014 DE 102014015093
(43) Veröffentlichungstag der Anmeldung: 16.08.2017
(73) Patentinhaber: Audi AG, 85045 Ingolstadt (DE)
(72) Erfinder: WEIDEMANN, Dieter, 85134 Stammham (DE); HANICKEL, Heiko, 85110 Kipfenberg (DE); KOLB, Florian, 85049 Ingolstadt (DE); BRÜHL, Hans, Jörg, 85092 Kösching (DE)
(74) Vertreter: Lehle, Josef
(86) Internationale Anmeldenummer: PCT/EP2015/001815
(87) Internationale Veröffentlichungsnummer: WO 2016/055137

(56) Entgegenhaltungen:
- EP-A2- 0 133 645
- DE-A1-102011 077 748
- US-A1- 2009 014 272
- US-A1- 2013 334 001

## Beschreibung

Die Erfindung betrifft eine Klauenkupplung mit zwei mit Klauen oder Zähnen versehenen Kupplungselementen, von denen eines beweglich ist, sowie einer Stelleinrichtung zum Ein und Ausrücken bzw. Schließen und Öffnen der Kupplung durch eine Stellbewegung des beweglichen Kupplungselements. Klauenkupplungen besitzen allgemein zwei um eine Drehachse drehbare Kupplungselemente, die an ihren gegenüberliegenden Stirnseiten mit komplementären Eingriffskonturen oder Verzahnungen versehen sind. Die Eingriffskonturen oder Verzahnungen bestehen jeweils aus einer oder mehreren Reihen von Klauen oder Zähnen, die von benachbarten Zähnen durch Zahnlücken getrennt und so aneinander angepasst sind, dass bei eingerückter Kupplung die Zähne jedes Kupplungselements in die Lücken zwischen den Zähnen des jeweils anderen Kupplungselements eingreifen und eine formschlüssige drehfeste Verbindung zwischen dem treibenden Kupplungselement und dem angetriebenen Kupplungselement herstellen. Eines der beiden Kupplungselemente ist gewöhnlich in axialer Richtung der Drehachse ortsfest, während das andere Kupplungselement von einer Stelleinrichtung in axialer Richtung der Drehachse hin und her bewegt werden kann, so dass es zum Einrücken der Kupplung in formschlüssigen Zahneingriff mit dem anderen Kupplungselement gebracht bzw. zum Ausrücken der Kupplung so weit vom anderen Kupplungselement entfernt werden kann, dass sich die Zähne des treibenden Kupplungselements ohne Kontakt zu den Zähnen des angetriebenen Kupplungselements an diesen vorbei drehen können. Stand der Technik Beispiele sind in US 2009/014272 und DE 10 2011 077748 offenbart.

Beim Einrücken oder Schließen von Klauenkupplungen kann es jedoch vorkommen, dass sich die Zähne der beiden Kupplungselemente paarweise gegenüberliegen bzw. auf Stoß stehen, so dass sie nicht in die Zahnlücken des jeweils anderen Kupplungselements eintreten. Dies führt dazu, dass die gegenüberliegenden Zähne der beiden Kupplungselemente nur reibschlüssig gegeneinander angepresst werden, jedoch keine formschlüssige Verbindung hergestellt wird und damit auch kein vollständiger Kraftfluss zwischen den beiden Kupplungselementen stattfindet.

Ein sicheres Einrücken oder Schließen von Klauenkupplungen im Antriebsstrang von Kraftfahrzeugen wird in der Regel durch eine Synchronisierungseinrichtung gewährleistet, welche die Drehzahl des angetriebenen Kupplungselements vor dem Einrücken der Kupplung so an die Drehzahl des treibenden Kupplungselements anpasst, dass sich die beiden Drehzahlen leicht unterscheiden. Dadurch wird bei der gegenseitigen Annäherung der beiden Kupplungselemente erreicht, dass sich die Zähne der beiden Kupplungselemente langsam aneinander vorbeidrehen und bei weiterer Annäherung in die Lücken zwischen den Zähnen des jeweils anderen Kupplungselements eintreten.

Da jedoch Synchronisierungseinrichtungen einen nicht unerheblichen zusätzlichen Aufwand verursachen, wird nach Möglichkeiten gesucht, diesen Aufwand zu vermeiden, wobei allerdings auch ohne eine Synchronisierungseinrichtung sichergestellt werden muss, dass die Kupplung tatsächlich eingerückt oder geschlossen ist und dass die Kupplungselemente nicht "Zahn-auf-Zahn" stehen.

Bei Kraftfahrzeugen der Anmelderin mit einem abschaltbaren Allradantrieb wird im Antriebsstrang eine Klauenkupplung ohne Synchronisierungseinrichtung verwendet, um die zuschaltbare Achse durch Einrücken der Klauenkupplung zuzuschalten bzw. durch Ausrücken der Klauenkupplung abzuschalten. Da jedoch wegen der fehlenden Synchronisierungseinrichtung bei stillstehendem Kraftfahrzeug die Zähne des einen Kupplungselements entweder den Zahnlücken oder den Zähnen des anderen Kupplungselements gegenüberliegen können, darf beim Einrücken der Kupplung bei stillstehendem Kraftfahrzeug einerseits nicht zu viel Drehmoment zugestellt werden, weil dies zu Verschleiß führen könnte, wenn die beiden Kupplungselemente noch "Zahn-auf-Zahn" stehen. Andererseits sollte aber ausreichend Drehmoment zugestellt werden, um im Falle einer "Zahn-auf-Zahn"-Stellung ein Verdrehen der beiden Kupplungselemente in Bezug zueinander zu ermöglichen und bereits beim Anfahren Drehmoment auf beide Achsen zu verteilen. Dieser Kompromiss wird als nachteilig angesehen.

Ausgehend hiervon liegt der Erfindung die Aufgabe zugrunde, eine Klauenkupplung der eingangs genannten Art und insbesondere eine nicht mit einer Synchronisierungseinrichtung ausgestattete Klauenkupplung in einem Antriebsstrang eines Kraftfahrzeugs dahingehend zu verbessern, dass ein ordnungsgemäßes Einrücken der Klauenkupplung festgestellt werden kann.

Diese Aufgabe wird erfindungsgemäß dadurch gelöst mit einer Konstruktion gemäß dem Anspruch 1.

Bei den Kraftfahrzeugen der Anmelderin mit dem abschaltbaren Allradantrieb und der Klauenkupplung im Antriebsstrang zwischen den beiden Achsen kann durch die erfindungsgemäße Maßnahme auch bei stillstehendem Kraftfahrzeug ausreichend Drehmoment zur Klauenkupplung zugestellt werden, um bereits beim Anfahren beide Achsen bzw. alle Räder anzutreiben, wenn mit Hilfe des Sensors festgestellt worden ist, dass sich das bewegliche Kupplungselement ordnungsgemäß in formschlüssigen Zahneingriff mit dem anderen Kupplungselement bewegt hat und sich damit die Klauenkupplung sicher im eingerückten Zustand befindet.

Erfindungsgemäss ist das Kupplungselement mit einer Betätigungskontur versehen, die sich beim Einrücken der Kupplung am Sensor vorbeibewegt. Dabei wird durch die Vorbeibewegung der Betätigungskontur im Sensor ein Signal erzeugt, das ausgewertet werden kann, um auf diese Weise die Bewegung des Kupplungselements in den eingerückten Zustand zu erfassen. Die Betätigungskontur ist zweckmäßig so angeordnet, dass sie sich nicht am Sensor vorbeibewegt, wenn die Klauenkupplung nicht ordnungsgemäß geschlossen ist und sich die die beiden Kupplungselemente noch in einer "Zahn-auf-Zahn"-Stellung befinden.

Vorteilhaft ist der Sensor ein elektromagnetischer Sensor, der eine Spule und einen Anker umfasst, von denen der letztere durch die Vorbeibewegung der Betätigungskontur am Sensor verlagert und dadurch in der Spule eine messbare Spannung induziert wird.

Erfindungsgemäss ist die Klauenkupplung bereits mit einem elektromagnetischen Aktuator versehen, um das bewegliche Kupplungselement im ausgerückten Zustand festzuhalten, und wenn dieser Aktuator eine Spule, einen Anker und einen mit dem Anker verbundenen Stift umfasst, der bei der Betätigung des Aktuators in Eingriff mit einer Verriegelungskontur des beweglichen Kupplungselement gebracht wird, wie dies bei der Klauenkupplung im Antriebsstrang der Kraftfahrzeuge der Anmelderin mit dem abschaltbaren Allradantrieb der Fall ist, dann ist gemäß der Erfindung der Aktuator zugleich als Sensor zur Erfassung der Bewegung des beweglichen Kupplungselements in den eingerückten Zustand genutzt. Zu diesem Zweck ist die am beweglichen Kupplungselement vorgesehene Betätigungskontur vorteilhaft in Bewegungsrichtung des Kupplungselements beim Einrücken derart hinter der Verriegelungskontur angeordnet, dass sie eine Kraft auf den Stift ausübt und dadurch den Anker in der Spule verlagert, wenn sie sich nach der Entriegelung beim Einrücken der Kupplung am Stift vorbei bzw. unter dem Stift hindurch bewegt. Durch die Bewegung des Ankers wird in der Spule des Aktuators eine Spannung induziert, die ausgewertet werden kann, um das ordnungsgemäße Einrücken der Kupplung zu detektieren.

Mit anderen Worten wird der Aktuator zugleich als Detektor genutzt, während der Stift sowohl als Arretierung zum Festhalten des Kupplungselements und als Fühler zum Erfassen der Bewegung des Kupplungselements genutzt werden kann. Dadurch ist ein separater Sensor neben dem Aktuator entbehrlich.

Der Stift steht vorteilhaft bei ausgerückter Kupplung mit einer Verriegelungskontur des beweglichen Kupplungselements im Eingriff und kann bei einer Verwendung des kombinierten Aktuators/Sensors als Aktuator durch Anlegen einer Spannung an der Spule zusammen mit dem Anker verlagert werden, um ihn aus dem Eingriff mit der Verriegelungskontur auszurücken und das bewegliche Kupplungselement freizugeben.

Bei einer Verwendung des kombinierten Aktuators/Sensors als Sensor verlagert hingegen die in der Bewegungsrichtung des Kupplungselements beim Einrücken hinter der Verriegelungskontur angeordnete Betätigungskontur den Stift und damit den Anker, wenn sie sich beim Einrücken der Kupplung am Stift vorbeibewegt, wobei in der Spule eine Spannung induziert wird.

Die Betätigungskontur weist zweckmäßig in der Bewegungsrichtung des Kupplungselements eine ansteigende Flanke auf, die eine Kraft auf den Stift und den Anker ausübt, so dass der Anker in der Spule verschoben wird, während sich die Betätigungskontur am Aktuator/Sensor vorbeibewegt. Die dabei in der Spule induzierte Spannung wird einer Auswerteschaltung mit einem A/D-Baustein zugeführt und erzeugt ein Triggersignal, das anzeigt, dass die Klauenkupplung ordnungsgemäß eingerückt ist.

Die vorliegende Erfindung wird bevorzugt bei Klauenkupplungen eingesetzt, bei denen die Stelleinrichtung eine Feder und insbesondere eine Druckfeder umfasst, um das bewegliche Kupplungselement zum Einrücken der Kupplung in Eingriff mit dem anderen Kupplungselement zu bewegen, weil sich bei diesen Kupplungen anders als bei Kupplungen mit ausschließlich hydraulischen oder elektrischen Stelleinrichtungen nicht oder nur schwer überprüfen lässt, ob die Kupplung eingerückt bzw. geschlossen ist.

Im Folgenden wird die Erfindung anhand eines in der Zeichnung dargestellten Ausführungsbeispiels näher erläutert.
Fig. 1 zeigt eine schematische teilweise geschnittene Seitenansicht einer erfindungsgemäßen Klauenkupplung in ausgerücktem Zustand;
Fig. 2 zeigt eine entsprechende Ansicht der Klauenkupplung in eingerücktem Zustand;
Fig. 3 zeigt eine vergrößerte Ansicht des Ausschnitts III in Fig. 1;
Fig. 4 zeigt eine vergrößerte Ansicht des Ausschnitts IV in Fig. 2;
Fig. 5 zeigt ein Strom/Zeit-Diagramm.

Die in der Zeichnung schematisch dargestellte Klauenkupplung 1 dient dazu, eine erste Welle 2 und eine zweite Welle 3 mit fluchtender Drehachse 4 in einem Antriebsstrang eines Kraftfahrzeugs mit einem abschaltbaren Allradantrieb zum Fahren im Allradbetrieb drehfest miteinander zu verbinden bzw. ansonsten voneinander zu trennen. Bei der Welle 2 handelt es sich beispielhaft um die treibende Welle und bei der Welle 3 um die angetriebene Welle, die bei eingerückter oder geschlossener Kupplung 1 von der Welle 2 getrieben wird.

Die Klauenkupplung 1 umfasst ein erstes Kupplungselement 5, das drehfest und in axialer Richtung der Drehachse 4 unverschiebbar mit der ersten Welle 2 verbunden ist, sowie ein zweites bewegliches Kupplungselement 6, das drehfest mit der zweiten Welle 3 verbunden und in axialer Richtung der Drehachse 4 auf der Welle 3 verschiebbar ist.

Die beiden Kupplungselemente 5, 6 sind allgemein koaxial zu den Wellen 2, 3 ausgebildet und umfassen jeweils einen zur Verbindung mit der Welle 2 bzw. 3 dienenden Nabenteil 7 bzw. 8 sowie einen radial äußeren ringförmigen Kupplungsteil 9 bzw. 10.

Der Nabenteil 7 des ersten Kupplungselements 5 ist drehfest mit der ersten Welle 2 verbunden. Die Welle 2 ist dazu mit einer Nut 11 versehen, in die eine über den inneren Umfang einer Wellenbohrung des Kupplungselements 5 überstehende Feder (nicht dargestellt) ragt.

Zwischen dem Nabenteil 8 des zweiten Kupplungselements 6 und der zweiten Welle 3 befindet sich eine mit einer axialen Außenverzahnung 12 versehene Buchse 13, die drehfest mit der zweiten Welle 3 verbunden ist und in Bezug zur Welle 3 axial unverschiebbar ist. Mit der Außenverzahnung 12 der Buchse 13 steht eine komplementäre Innenverzahnung 14 am inneren Umfang des Nabenteils 8 des zweiten Kupplungselements 6 im Zahneingriff, wodurch das zweite Kupplungselement 6 in Bezug zur Buchse 13 und zur zweiten Welle 3 axial verschiebbar ist.

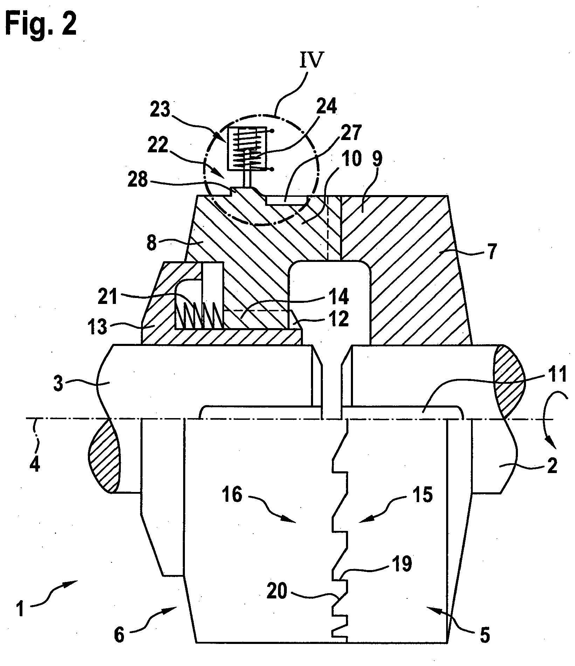

Die beiden Kupplungsteile 9, 10 sind an ihren gegenüberliegenden Stirnenden mit komplementären Verzahnungen 15, 16 versehen. Die Verzahnungen 15, 16 bestehen aus jeweils aus einer Mehrzahl von Zähnen 17 und Zahnlücken 18, die sich in Umfangsrichtung der Kupplungsteile 9, 10 abwechseln und symmetrisch oder unsymmetrisch ausgeführt sein können . Die Verzahnungen 15, 16 stehen bei eingerückter oder geschlossener Kupplung 1 (Fig. 2) formschlüssig im Zahneingriff, wobei die Zähne 17 des ersten Kupplungselements 5 vollständig in die Zahnlücken 18 des zweiten Kupplungselements 6 ragen, die Zähne 17 des zweiten Kupplungselements 6 vollständig in die Zahnlücken 18 des ersten Kupplungselements 5 ragen und beide Zahnflanken 19, 20 der Zähne 17 gegen die gegenüberliegenden Begrenzungen der Zahnlücken 18 anliegen. Die in Drehrichtung weisenden Zahnflanken 19 der Zähne 17 des ersten Kupplungselements 5 auf der treibenden Welle 2 und die gegenüberliegenden Begrenzungen der Zahnlücken 18 des zweiten Kupplungselements 6 auf der angetriebenen Welle 3 sind allgemein senkrecht zur Drehrichtung ausgerichtet, während die anderen Zahnflanken 20 der Zähne 17 des ersten Kupplungselements 5 und die gegenüberliegenden Begrenzungen der Zahnlücken 18 des zweiten Kupplungselements 6 schräg geneigt sind, um das Einrücken der Zähne 17 in die Zahnlücken 18 zu erleichtern.

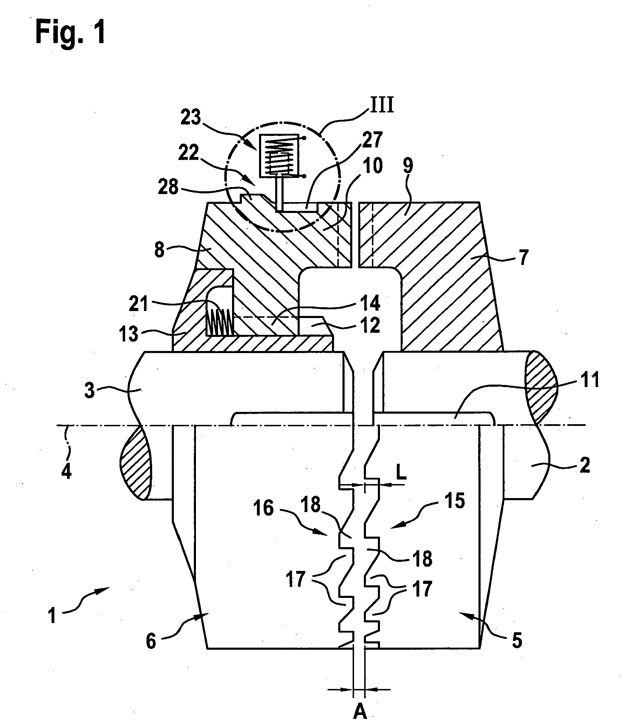

Zum Ausrücken oder Öffnen der Klauenkupplung 1 dient ein Stellorgan (nicht dargestellt) einer beispielsweise hydraulisch oder per Spindelantrieb betätigten Stelleinrichtung, das auf das bewegliche zweite Kupplungselement 6 einwirkt, um dieses in die ausgerückte Stellung zu bewegen, in der die Kopfenden der Zähne 17 der beiden Verzahnungen 15, 16 einen kleinen axialen Abstand A voneinander aufweisen, wie in Fig. 1 dargestellt.

Zum Einrücken oder Schließen der Kupplung 1 ist zwischen der Buchse 13 und dem zweiten Kupplungselement 6 eine Rückstellfeder in Form einer Schraubendruckfeder 21 angeordnet, die sich einerseits gegen ortsfest die Buchse 13 und andererseits gegen das verschiebbare Kupplungselement 6 abstützt. Die Feder 21 wird gespannt, wenn das Kupplungselement 6 beim Ausrücken oder Öffnen der Kupplung 1 durch das Stellorgan vom Kupplungselement 5 weg bewegt wird.

Um das zweite Kupplungselement 6 in der ausgerückten oder geöffneten Stellung festzuhalten, ist ein Verriegelungsmechanismus 22 vorgesehen, der einen elektromagnetischen Aktuator/Sensor 23 mit einer Spule 24 und einem Anker 25 sowie einen in Verlängerung des Ankers 25 über den Aktuator/Sensor 23 überstehenden und starr mit dem Anker 25 verbundenen Stift 26 umfasst. Im Aktuator-Betrieb wird eine Spannung an der Spule 24 angelegt, um den Anker 25 in der Spule 24 vor oder zurück zu bewegen und dadurch den Stift 26 ein oder auszufahren. Im Sensor-Betrieb wird in der Spule 24 eine Spannung induziert, wenn der Anker 25 durch eine auf den Stift 26 ausgeübte Kraft innerhalb der Spule 24 vor oder zurück bewegt wird.

Gegenüber vom Aktuator/Sensor 23 ist das zweite Kupplungselement 6 am äußeren Umfang des Kupplungsteils 10 mit einer Verriegelungskontur 27 und mit einer Betätigungskontur 28 versehen, die mit dem Stift 26 des Aktuators/Sensors 23 zusammenwirken, der entlang des Bewegungswegs des zweiten Kupplungselements 6 angeordnet ist.

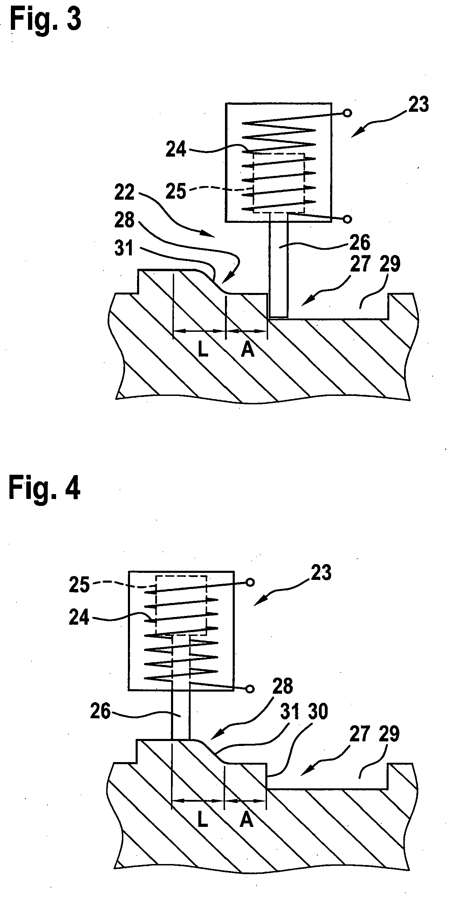

Wie am besten in Fig. 4 dargestellt, besteht die Verriegelungskontur 27 im Wesentlichen aus einer Nut 29, die an ihrem vom ersten Kupplungselement 5 abgewandten Ende mit einer parallel zur Bewegungsrichtung des Stifts 26 ausgerichteten Stufe 30 versehen ist. Bei ausgerückter bzw. geöffneter Kupplung 1 wird die Stufe 30 von der Feder 21 gegen den zuvor ausgefahrenen Stift 26 angepresst, wie in Fig. 1 dargestellt. In dieser Stellung hält der Stift 26 das Kupplungselement 6 im ausgerückten Zustand fest und verhindert das Einrücken bzw. Schließen der Kupplung 1.

Wenn an der Spule 24 des Aktuator/Sensors 23 eine Entriegelungsspannung angelegt wird, die den Anker 25 von der Kupplung 1 weg bewegt, wird der Stift 26 eingefahren, wobei er sich aus der Nut 29 der Verriegelungskontur 27 herausbewegt und das Kupplungselement 6 freigibt, das dann von der Feder 21 in Richtung des ersten Kupplungselements 5 gedrückt wird.

Wenn in diesem Zustand die Zähne 17 des Kupplungselements 6 den Zahnlücken 18 des Kupplungselements 5 gegenüberliegen, und umgekehrt, wie in Fig. 1 dargestellt, wird das Kupplungselement 6 von der Feder 21 verschoben, bis die Zähne 17 beider Kupplungselemente 5, 6 vollständig in die Zahnlücken 18 des jeweils anderen Kupplungselements 6, 5 eingreifen, wie in Fig. 2 dargestellt. Dadurch wird eine ordnungsgemäße formschlüssige Verbindung zwischen den beiden Kupplungselementen 5, 6 hergestellt.

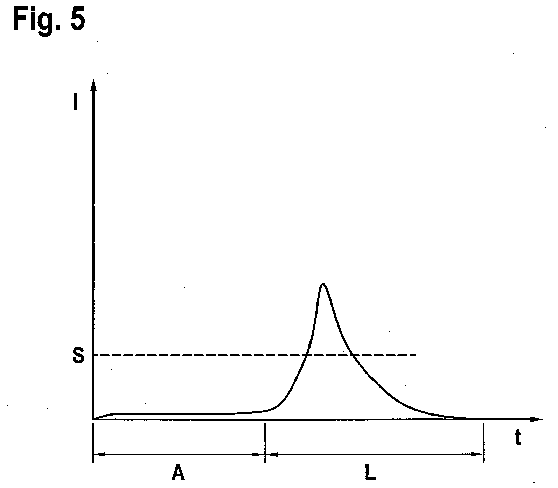

Die Betätigungskontur 28 weist eine dem ersten Kupplungselement 5 zugewandte ansteigende Flanke 31 auf, die in Bewegungsrichtung des Kupplungselements 6 beim Einrücken der Kupplung 1 in einem Abstand A hinter der Stufe 30 am äußeren Umfang des Kupplungselements 6 beginnt. Die Steigung der Flanke 31 wird beispielhaft allmählich größer und nimmt dann wieder ab. Der Abstand A entspricht dem axialen Abstand der Köpfe der Zähne 17 der beiden Kupplungselemente 5, 6 bei ausgerückter oder geöffneter Kupplung 1 (Fig. 1), so dass sich die ansteigende Flanke 31 erst dann in axialer Richtung unter dem teilweise ausgefahrenen Stift 26 hindurch bewegt, wenn die Verzahnungen 9, 10 der beiden Kupplungselemente 5, 6 miteinander in Eingriff treten. Die Länge L der Betätigungskontur 28 entspricht der Höhe der Zähne 17. Während sich die Betätigungskontur 28 in Richtung des ersten Kupplungselements 5 unter dem Stift 26 hindurchbewegt, übt sie eine Kraft auf den Stift 26 aus, die den Anker 25 innerhalb der Spule 24 von der Klauenkupplung 1 weg verschiebt, wie in Fig. 4 dargestellt. Durch diese Verschiebung des Ankers 25 wird in der Spule eine Spannung induziert, die dazu führt, dass ein Strom durch die Spule 24 fließt, wie in Fig. 5 angezeigt. Die in der Spule 24 induzierte Spannung und/oder der durch die Spule 24 fließende Strom werden von einer mit der Spule 24 verbundenen Auswerteschaltung (nicht dargestellt) gemessen und ausgewertet, die einen A/D-Baustein enthält und ein Triggersignal erzeugt, wenn die Spannung oder der Strom einen vorgegebenen Schwellenwert S übersteigen, was ein ordnungsgemäßes Schließen der Kupplung 1 anzeigt.

Wenn hingegen die Zähne 17 des ersten Kupplungselements 5 den Zähnen 17 des zweiten Kupplungselements 6 in einer "Zahn-auf-Zahn"-Stellung gegenüberliegen, werden die Zähne 17 des zweiten Kupplungselements 6 von der Feder 21 reibschlüssig gegen die Zähne 17 des ersten Kupplungselements 5 angepresst. In diesem Fall bewegt sich die Betätigungskontur 28 nicht unter dem Stift 26 hindurch, so dass sich der Anker 25 innerhalb der Spule 24 nicht verschiebt und in der Spule 24 weder eine Spannung induziert wird, noch ein Strom fließt. Daher wird von der Auswerteschaltung kein Triggersignal erzeugt. Dies bedeutet, dass die Kupplung 1 nicht ordnungsgemäß eingerückt oder geschlossen wurde.

## Patentansprüche

1. Klauenkupplung (1) mit zwei mit Zähnen (17) oder Klauen versehenen Kupplungselementen (5, 6), von denen eines (6) beweglich ist, sowie einer Stelleinrichtung zum Ein- und Ausrücken der Kupplung (1) durch eine Stellbewegung des beweglichen Kupplungselements (6), wobei entlang des Bewegungswegs des beweglichen Kupplungselements (6) ein Sensor (23) angeordnet ist, der die Bewegung des Kupplungselements (6) in den eingerückten Zustand erfasst, und wobei das Kupplungselement (6) mit einer Betätigungskontur (28) versehen ist, die sich beim Einrücken der Kupplung (1) am Sensor (23) vorbeibewegt, **dadurch gekennzeichnet, dass** der Sensor (23) ein elektromagnetischer Aktuator (23) zum Festhalten des beweglichen Kupplungselements (6) im ausgerückten Zustand der Kupplung (1) ist.

2. Klauenkupplung (1) nach Anspruch 1, **dadurch gekennzeichnet, dass** die Betätigungskontur (28) einen Anker (25) in einer Spule (24) des Sensors (23) verlagert und dadurch in der Spule (24) eine Spannung induziert.

3. Klauenkupplung (1) nach Anspruch 1, **dadurch gekennzeichnet, dass** der Aktuator/Sensor (23) einen Stift (26) umfasst, der bei ausgerückter Kupplung (1) mit einer Verriegelungskontur (27) des beweglichen Kupplungselements (6) im Eingriff steht und aus dem Eingriff mit der Verriegelungskontur (27) ausgerückt werden kann, um das bewegliche Kupplungselement (6) freizugeben.

4. Klauenkupplung (1) nach Anspruch 2 und 3, **dadurch gekennzeichnet, dass** die Betätigungskontur (28) in der Bewegungsrichtung des Kupplungselements (6) beim Einrücken der Kupplung (1) hinter der Verriegelungskontur (27) angeordnet ist.

5. Klauenkupplung (1) nach Anspruch 4, **dadurch gekennzeichnet, dass** die Betätigungskontur (28) einen axialen Abstand (A) von der Verriegelungskontur (27) aufweist, der dem axialen Abstand (A) der Zähne (17) der Kupplung (1) im ausgerückten Zustand entspricht.

6. Klauenkupplung (1) nach Anspruch 4 oder 5, **dadurch gekennzeichnet, dass** die Betätigungskontur (28) eine axiale Länge (L) aufweist, die der Höhe der Zähne (17) entspricht.

7. Klauenkupplung (1) nach einem der vorangehenden Ansprüche, **gekennzeichnet durch** eine mit dem Sensor (23) verbundene Auswerteschaltung mit einem A/D-Baustein.

8. Klauenkupplung (1) nach einem der vorangehenden Ansprüche, **dadurch gekennzeichnet, dass** die Stelleinrichtung eine Druckfeder (21) umfasst, die das bewegliche Kupplungselement (6) zum Einrücken der Kupplung (1) in Eingriff mit dem anderen Kupplungselement (5) drückt.

## Claims

1. Dog clutch (1) having two clutch elements (5, 6) provided with teeth (17) or claws, one (6) of which is movable, and an adjusting device for engaging or disengaging the clutch (1) by an adjusting movement of the movable clutch element (6), wherein a sensor (23) is arranged along the movement path of the movable clutch element (6), which sensor detects the movement of the clutch element (6) into the engaged state, and wherein the clutch element (6) is provided with an actuation contour (28), which moves past the sensor (23), when the clutch (1) is engaged, **characterised in that** the sensor (23) is an electromagnetic actuator (23) for retaining the movable clutch element (6) when the clutch (1) is in the engaged state.

2. Dog clutch (1) according to claim 1, **characterised in that** the actuation contour (28) displaces an armature (25) in a coil (24) of the sensor (23) and thus induces a voltage in the coil (24).

3. Dog clutch (1) according to claim 1, **characterised in that** the actuator/sensor (23) comprises a pin (26), which is engaged with a locking contour (27) of the movable clutch element (6) when the clutch (1) is disengaged and can be disengaged from said engagement with the locking contour (27), in order to release the movable clutch element (6).

4. Dog clutch (1) according to claim 2 and 3, **characterised in that** the actuation contour (28) is arranged behind the locking contour (27) in direction of movement of the clutch element (6) when the clutch (1) is engaged.

5. Dog clutch (1) according to claim 4, **characterised in that** the actuation contour (28) has an axial distance (A) from the locking contour (27), which corresponds to the axial distance (A) of the teeth (17) of the clutch (1) in the disengaged state.

6. Dog clutch (1) according to claim 4 or 5, **characterised in that** the actuation contour (28) has an axial length (L), which corresponds to the height of the teeth (17).

7. Dog clutch (1) according to any one of the preceding claims, **characterised by** an evaluation circuit with an A/D module, which evaluation circuit is connected to the sensor(23).

8. Dog clutch (1) according to any one of the preceding claims, **characterised in that** the adjusting device comprises a compression spring (21), which presses the movable clutch element (6) in order to engage the clutch (1) into engagement with the other clutch element (5).

## Revendications

1. Embrayage à griffes (1) avec deux éléments de couplage (5, 6) pourvus de dents (17) ou de griffes, dont un (6) est mobile, ainsi qu'avec un appareil de réglage pour l'engagement et le désengagement de l'embrayage (1) par l'intermédiaire d'un mouvement de réglage de l'élément de couplage mobile (6), dans lequel un capteur (23) est agencé le long de la trajectoire de mouvement de l'élément de couplage mobile (6), lequel saisit le mouvement de l'élément de couplage (6) dans l'état désengagé, et dans lequel l'élément de couplage (6) est pourvu d'un profil d'actionnement (28) qui passe devant le capteur (23) lorsque l'embrayage (1) est engagé, **caractérisé en ce que** le capteur (23) est un actionneur électromagnétique (23) destiné à fixer l'élément de couplage mobile (6) dans l'état désengagé de l'embrayage (1).

2. Embrayage à griffes (1) selon la revendication 1, **caractérisé en ce que** le profil d'actionnement (28) déplace une ancre (25) dans une bobine (24) du capteur (23) et **en ce qu'**il induit une tension dans la bobine (24).

3. Embrayage à griffes (1) selon la revendication 1, **caractérisé en ce que** l'actionneur/capteur (23) comprend une tige (26) qui se tient en prise avec un profil de verrouillage (27) de l'élément de couplage mobile (6) lorsque l'accouplement est désengagé et peut sortir de la prise avec le profil de verrouillage (27) pour libérer l'élément de couplage mobile (6).

4. Embrayage à griffes (1) selon la revendication 2 et 3, **caractérisé en ce que** le profil d'actionnement (28) est agencé derrière le profil de verrouillage (27) dans la direction de mouvement de l'élément de couplage mobile (6) lorsque l'embrayage (1) est désengagé.

5. Embrayage à griffes (1) selon la revendication 4, **caractérisé en ce que** le profil d'actionnement (28) présente un écart axial (A) par rapport au profil de verrouillage (27) qui correspond à l'écart axial (A) des dents (17) de l'embrayage (1) dans l'état désengagé.

6. Embrayage à griffes (1) selon la revendication 4 ou 5, **caractérisé en ce que** le profil d'actionnement (28) présente une longueur axiale (L) qui correspond à la hauteur des dents (17).

7. Embrayage à griffes (1) selon l'une quelconque des revendications précédentes, **caractérisé par** un circuit d'analyse lié au capteur (23) avec des composants A/D.

8. Embrayage à griffes (1) selon l'une quelconque des revendications précédentes, **caractérisé en ce que** l'appareil de réglage comprend un ressort de compression (21) qui pousse l'élément de couplage mobile (6) à venir en prise avec l'autre élément de couplage (5) pour engager l'embrayage (1).
